# EUROPÄISCHE PATENTSCHRIFT

(11) **EP 3 189 217 B1**
(45) Veröffentlichungstag und Bekanntmachung des Hinweises auf die Patenterteilung: **28.11.2018**
(21) Anmeldenummer: 15771852.9
(22) Anmeldetag: 01.09.2015
(51) Int. Cl.: B29C 70/06, B29C 70/30, F01D 21/04, B29C 70/32

(54) **UMMANTELUNG FÜR EIN FLUGZEUGTRIEBWERK UND VERFAHREN ZUR HERSTELLUNG EINER SOLCHEN UMMANTELUNG**
CASING FOR AN AIRCRAFT ENGINE, AND METHOD FOR PRODUCING A CASING OF SAID TYPE
REVÊTEMENT POUR MOTEUR D'AVION ET PROCÉDÉ DE FABRICATION D'UN TEL REVÊTEMENT

(30) Priorität: 04.09.2014 AT 506092014
(43) Veröffentlichungstag der Anmeldung: 12.07.2017
(73) Patentinhaber: FACC AG, 4910 Ried im Innkreis (AT)
(72) Erfinder: NELBÖCK, Günter, 4863 Seewalchen (AT); WÜRTINGER, Andreas, 4941 Mehrnbach (AT); FÜRST, Walter, 1210 Wien (AT)
(74) Vertreter: Sonn & Partner Patentanwälte
(86) Internationale Anmeldenummer: PCT/AT2015/050207
(87) Internationale Veröffentlichungsnummer: WO 2016/033624

(56) Entgegenhaltungen:
- EP-A1- 2 497 626
- WO-A1-2012/065155
- US-A1- 2009 294 567
- US-A1- 2013 216 367

## Beschreibung

Die Erfindung betrifft eine Ummantelung für ein Flugzeugtriebwerk, insbesondere Mantelstromrohr oder Fan-Casing, bestehend aus mehreren ausgehärteten Prepreg-Lagen mit unterschiedlicher Ausrichtung der Fasern, welche Prepreg-Lagen aus mehreren Segmenten mit einer Breite, die im Wesentlichen der Länge der Ummantelung entspricht, bestehen, und die Segmente mit einer Überlappung in Umfangsrichtung der Ummantelung angeordnet sind.

Weiters betrifft die Erfindung ein Verfahren zur Herstellung einer solchen Ummantelung für ein Flugzeugtriebwerk, wobei mehrere Prepreg-Lagen mit unterschiedlicher Ausrichtung der Fasern auf einer Form angeordnet und ausgehärtet werden, wobei zur Bildung jeder Prepreg-Lage mehrere Segmente mit einer Breite, die der Länge der Ummantelung entspricht, mit einer Überlappung in Umfangsrichtung der Ummantelung angeordnet werden.

Zur Reduktion des Gewichts von Flugzeugkomponenten werden auch Ummantelungen von Flugzeugtriebwerken, insbesondere Mantelstromrohre oder sogenannte Fan-Casings, zunehmend aus Faserverstärkten Kunststoffen hergestellt. Dabei wird die Ummantelung üblicherweise aus mehreren Prepreg-Lagen herstellt, wobei die einzelnen Prepreg-Lagen wiederum aus mehreren, üblicherweise 3 bis 4 Segmenten bestehen, die in Umfangsrichtung der Ummantelung überlappend angeordnet werden. Zur Verbesserung der Biege- und Torsionsfestigkeit wird die Ausrichtung der Fasern der einzelnen Prepreg-Lagen mit unterschiedlichem Winkel, insbesondere 0° und 90° für die Biegebelastung und +/- 45° für die Torsionsbelastung gewählt.

Als Ummantelung für Flugzeugtriebwerke werden insbesondere Mantelstromrohre, welche die äußere Begrenzung des sogenannten Bypass-Ducts, dem Ringspalt um das Triebwerk, bilden und Fan-Casings, das sind zylinderförmige Umhüllungen des Propellers des Triebwerks, hergestellt.

Beispielsweise beschreibt die EP 1 646 776 B1 ein Flugzeugtriebwerk mit einem derartigen Mantelstromgehäuse.

Die US 2013/0216367 A1 betrifft ein Fan-Casing für ein Flugzeugtriebwerk welches aus Umwickelungen von Fäden und Gelegen besteht, wobei das Hauptaugenmerk auf die Festigkeit im Falle eines Bruchs des Propellers des Triebwerks gerichtet ist, wohingegen keine Festigkeit gegen Brände beschrieben wird.

Die US 2009/0294567 A1 zeigt ein klassisches Verfahren zur spiralförmigen Anordnung von Prepreg-Bändern in Umfangsrichtung einer Ummantelung für ein Flugzeugtriebwerk.

Die WO 2012/065155 A1 zeigt eine Ummantelung für Flugzeugtriebwerke, wobei für die Erfüllung von Brandbestimmungen bzw. die Verhinderung einer Delamination bei Brandtests unter hohen Temperaturen eine zusätzliche Schicht aus flammhemmendem Material erforderlich ist.

Schließlich zeigt die EP 2 497 626 A1 ein sogenanntes Single-Roving-Verfahren unter Verwendung eines bandförmigen Materials, welches neben einer mechanischen Verbesserung Vorteile hinsichtlich der Brandfestigkeit ergibt.

Nachteilig bei derartigen Ummantelungen ist der relativ hohe Verschnitt an Prepreg-Materialien, insbesondere bei einer Faserausrichtung im Bereich von +/- 45°, da die Rohmaterialien für die Prepregs üblicherweise in Endlosrollen mit längsverlaufenden Fasern vorliegen. Darüber hinaus kommt es durch das Fehlen durchgängiger, um den gesamten Umfang der Ummantelung verlaufender Fasern, zu Festigkeitseinbußen, die insbesondere bei in der Flugzeugindustrie vorgeschriebenen Brandtests zu einem Auflösen der Lagen und zu einem Ausschuss des Bauteils führen können.

Zwar kann der Nachteil in Bezug auf die Festigkeit durch Reduktion der Anzahl der Segmente pro Prepreg-Lage und allenfalls Vergrößerung des Überlappungsbereichs verbessert werden, der Nachteil eines großen Verschnitts, insbesondere bei schräg verlaufenden Fasern ist jedoch weiterhin gegeben und führt zu einer Erhöhung der Herstellungskosten.

Die Aufgabe der vorliegenden Erfindung besteht in der Schaffung einer oben genannten Ummantelung für ein Flugzeugtriebwerk und ein Herstellungsverfahren für eine solche Ummantelung, durch welche die Festigkeitseigenschaften verbessert und die Herstellungskosten reduziert werden können. Nachteile bekannter Ummantelungen bzw. Herstellungsverfahren für solche Ummantelungen sollen vermieden oder zumindest reduziert werden.

Gelöst wird die Aufgabe durch eine oben genannte Ummantelung, wobei in Kombination mit den Prepreg-Lagen zumindest eine Verstärkungslage aus einem in mehreren Windungen angeordneten Prepreg-Band vorgesehen ist, wobei die Fasern des Prepreg-Bandes in Richtung der Längsausdehnung des Prepreg-Bandes angeordnet sind, und das Prepreg-Band jeder Verstärkungslage mit einer seitlichen Überlappung angeordnet ist. Durch die Kombination von derartigen Verstärkungslagen, die durch ein Prepreg-Band gebildet werden mit den Prepreg-Lagen, welches in mehreren Windungen zur Bildung der Ummantelung angeordnet werden, kann die Festigkeit der Ummantelung wesentlich erhöht werden. Weiters kann durch entsprechende Anordnung des Prepreg-Bandes jeder Verstärkungslage auf Prepreg-Lagen mit schräger Faserrichtung, die zu einem hohen Verschnitt führen, verzichtet werden. Somit können die Herstellungskosten reduziert werden, ohne dass die Festigkeitseigenschaften der Ummantelung reduziert werden. Die Fasern des Prepreg-Bandes jeder Verstärkungslage liegen über die zumindest eine Windung vorzugsweise ohne Unterbrechung vor. Durch die seitliche Überlappung des Prepreg-Bandes kann die Festigkeit der Ummantelung noch weiter erhöht werden. Insbesondere wird dadurch auch eine Delamination bei Brandtests wirkungsvoll verhindert oder zumindest erschwert.

Gemäß einem weiteren Merkmal der Erfindung weist das Prepreg-Band jeder Verstärkungslage eine Länge auf, welche zumindest dem Umfang der zu bildenden Ummantelung entspricht, und eine Breite, die einem Bruchteil der Länge der Ummantelung entspricht. Die Verstärkungslage der Ummantelung wird somit durch ein Prepreg-Band, das mehrfach umwickelt wird, hergestellt. Je nach Breite des Prepreg-Bandes und Überlappung des Prepreg-Bandes von einer Windung zur nächsten Windung muss das Prepreg-Band entsprechend oft um die vorausgehende Prepreg-Lage oder den jeweiligen Untergrund gewickelt werden.

Die Windungen des Prepreg-Bandes jeder Verstärkungslage können konstanten Steigungswinkel aufweisen. Durch einen derartigen im Wesentlichen konstanten Steigungswinkel ergibt sich eine entsprechende Neigung der im Prepreg-Band vorliegenden Fasern (die üblicherweise in Längsrichtung des Prepreg-Bandes vorliegen), wodurch die Torsionsfestigkeit der Ummantelung erhöht werden kann, ohne dass Prepregs mit schräger Faserrichtung verwendet werden müssen.

Alternativ dazu können die Windungen des Prepreg-Bandes jeder Verstärkungslage auch eine stetige Steigung aufweisen. Anstelle eines oben beschriebenen konstanten Steigungswinkels, kann die Windung eines Prepreg-Bandes jeder Verstärkungslage auch im Wesentlichen gerade verlaufen und nur zur Bildung der nächsten Windung im Wesentlichen um eine Breite des Prepreg-Bandes abgelenkt bzw. verschoben werden, was bei jeder Windung des Prepreg-Bandes entsprechend häufig wiederholt wird. Wichtig dabei ist, dass zumindest der Großteil der Fasern des Prepreg-Bandes über zumindest eine Windung ohne Unterbrechung vorliegen.

Die Windungen des Prepreg-Bandes jeder Verstärkungslage können überkreuzt angeordnet sein. Durch eine derartige überkreuzte Anordnung der Windungen des Prepreg-Bandes einer Verstärkungslage wird eine besonders hohe Torsionssteifigkeit erzielt. Dennoch kann ein Prepreg-Band mit längsverlaufenden Fasern ohne oder ohne wesentlichen Verschnitt verwendet werden.

Wenn die Fasern zumindest einer Prepreg-Lage eine Ausrichtung von im Wesentlichen 0° bzw. 90° aufweisen, kann der Verschnitt entsprechend minimiert werden. Bei Verwendung der meisten oder aller Prepreg-Lagen und Prepreg-Bänder mit einer solchen Faserrichtung oder geringen Abweichungen davon resultiert sehr geringen Verschnitt.

Jede Prepreg-Lage besteht vorzugsweise aus 3 oder 4 Segmenten.

Die Fasern können durch Kohlenstofffasern und/oder Glasfasern und/oder Aramidfasern und/oder Keramikfasern gebildet sein. Die Art der verwendeten Verstärkungsfasern und deren Ausrichtung, wird an die jeweiligen Anwendungen und Anforderungen entsprechend angepasst.

Gelöst wird die Aufgabe auch durch ein oben erwähntes Herstellungsverfahren, wobei zusätzlich zu den Prepreg-Lagen vor dem Aushärten zumindest eine Verstärkungslage aus einem in mehreren Windungen angeordneten Prepreg-Band mit einer Ausrichtung der Fasern in Richtung der Längsausdehnung des Prepreg-Bandes auf der Form angeordnet wird, wobei das Prepreg-Band jeder Verstärkungslage mit einer seitlichen Überlappung angeordnet wird. Wie bereits oben erwähnt, kann durch die Kombination einer derartigen Verstärkungslage mit den Prepreg-Lagen die Festigkeit der Ummantelung erhöht werden und durch Reduktion eines Verschnitts an Prepreg-Materialien eine Einsparung der Herstellungskosten erzielt werden. Zu den weiteren Vorteilen wird auf die obige Beschreibung der Ummantelung verwiesen.

Das Prepreg-Band jeder Verstärkungslage kann mit einem im Wesentlichen konstanten Steigungswinkel oder mit einer stetigen Steigung angeordnet werden.

Wenn die Windungen des Prepreg-Bandes jeder Verstärkungslage überkreuzt angeordnet werden, kann insbesondere eine Erhöhung der Torsionsfestigkeit erzielt werden.

Vorzugsweise wird zumindest eine Prepreg-Lage und zumindest eine Verstärkungslage mit einer Ausrichtung der Fasern von im Wesentlichen 0° bzw. 90° verwendet. Wie bereits oben erwähnt, kann dadurch der Verschnitt reduziert werden und es können somit die Herstellungskosten verringert werden.

Zur Bildung jeder Prepreg-Lage werden vorzugsweise 3 oder 4 Segmente angeordnet.

Vorzugsweise werden Prepreg-Lagen und Verstärkungslagen mit Fasern aus Kohlenstoff und/oder Glas und/oder Aramid und/oder Keramik verwendet.

Die Erfindung wird anhand der beigefügten Zeichnungen näher erläutert. Darin zeigen:
- Fig. 1a und 1b: zwei Ansichten einer herkömmlich hergestellten Ummantelung für ein Flugzeugtriebwerk in abgerollter Darstellung;
- Fig. 2: einen schematischen Querschnitt durch eine herkömmlich hergestellte Ummantelung für ein Flugzeugtriebwerk;
- Fig. 3: eine Ansicht einer erfindungsgemäßen Verstärkungslage einer Ummantelung für ein Flugzeugtriebwerk in abgerollter Darstellung;
- Fig. 4: eine Prinzipdarstellung eines Prepreg-Bandes zur Bildung einer Verstärkungslage;
- Fig. 5a bis 5e: Seitenansichten auf eine erfindungsgemäß aufgebaute Ummantelung bei verschiedenen Herstellungsschritten; und
- Fig 6a und 6b: zwei Varianten des Verlaufs eines Prepreg-Bandes einer Verstärkungslage.

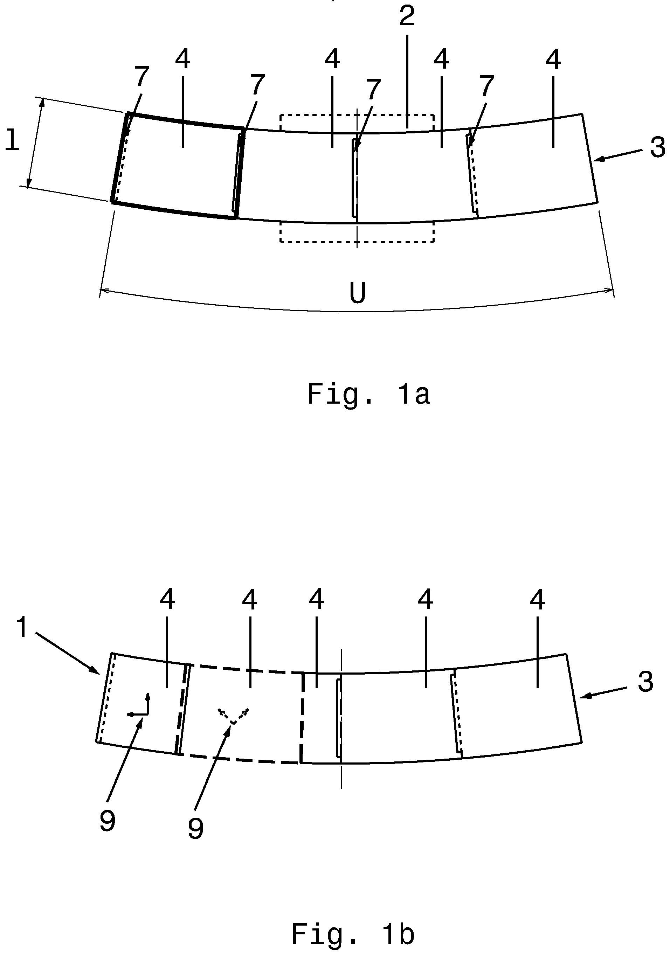

Fig. 1a zeigt eine Ansicht einer herkömmlich hergestellten Ummantelung 1 für ein Flugzeugtriebwerk 2 in abgerollter Darstellung. Dabei wird jeweils eine Prepreg-Lage 3 aus mehreren, hier vier Segmenten 4, mit einer Breite b_{B}, die im Wesentlichen der Länge 1 der Ummantelung 1 entspricht, angeordnet. Zur Erhöhung der Festigkeit, werden die einzelnen Segmente 4 mit einer Überlappung 7 in Umfangsrichtung der Ummantelung 1 angeordnet. Die Faserrichtung der Fasern 9 der Segmente 4 der Prepreg-Lagen 3 sind in Fig. 1b durch entsprechende Linien angedeutet. Hier sind die Fasern 9 der Segmente 4 in Umfangsrichtung der Ummantelung 1 oder 90° dazu angeordnet sein, wodurch kein wesentlicher Verschnitt resultiert, da die Segmente 4 der Prepreg-Lagen 3 üblicherweise aus Rohmaterial in Form von Endlosbahnen mit einer solchen Faserrichtung hergestellt werden. Bei einer schrägen Anordnung der Fasern 9 (wie im Segment 4 der nächsten Prepreg-Lage 3 angedeutet), die zur Erzielung einer höheren Torsionsfestigkeit der Ummantelung 1 notwendig ist, resultiert hingegen ein großer Verschnitt, wodurch die Herstellungskosten entsprechend erhöht werden.

Üblicherweise werden mehrere Prepreg-Lagen 3, beispielsweise vier bis sechs Prepreg-Lagen 3 übereinander angeordnet und danach im Autoklaven bei entsprechender Temperatur und entsprechendem Druck ausgehärtet. Durch Kombination von Prepreg-Lagen 3 mit unterschiedlicher Richtung der Fasern 9, kann die entsprechende notwendige Festigkeit des Bauteils erzielt werden. Üblicherweise wird die Biegefestigkeit durch Kombination von Prepreg-Lagen 3 mit Faserrichtung 0° und 90° und die Torsionsfestikeit durch Kombination von Prepreg-Lagen 3 mit Faserrichtungen von +/- 45° erzielt.

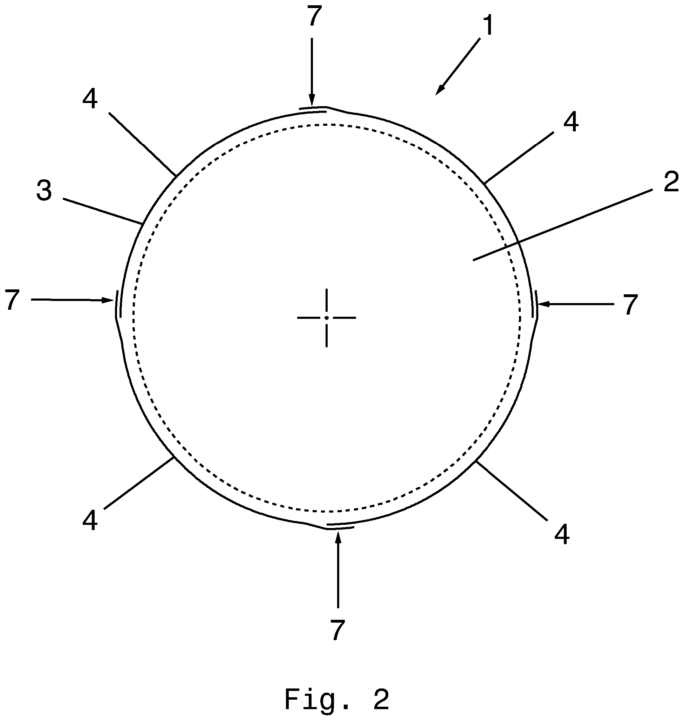

Fig. 2 zeigt einen schematischen Querschnitt durch eine herkömmlich hergestellte Ummantelung 1 für ein Flugzeugtriebwerk 2. Dabei werden vier Segmente 4 je Prepreg-Lage 3 verwendet, die zur Bildung der Überlappung 7 jeweils etwas mehr als 90° der Ummantelung 1 einschließen. Bei einer derartigen Bauweise kommt es neben dem hohen Verschnitt bei Verwendung von Segmenten 4 mit schrägem Verlauf der Fasern 9 zu Festigkeitseinbußen im Bereich der Überlappung 7, insbesondere zu einer Delamination bei Brandtests unter hohen Temperaturen (z.B. 250°C) bei welchen das Harz der Prepreg-Lage 3 verflüssigt wird.

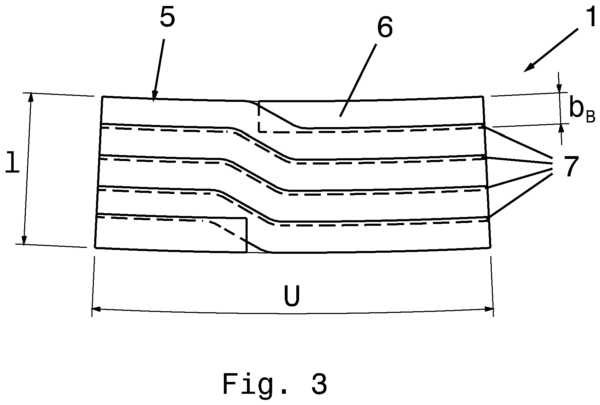

Fig. 3 zeigt eine Ansicht einer erfindungsgemäßen Verstärkungslage einer Ummantelung 1 für ein Flugzeugtriebwerk 2 in abgerollter Darstellung. Dabei wird eine Verstärkungslage 5 durch ein Prepreg-Band 6, welches in mehreren (hier 5) Windungen umschlungen wird, gebildet. Im dargestellten Beispiel wird das Prepreg-Band 6 nicht mit einer konstanten Steigung umwunden, sondern vor Erreichen des Anfangs des Prepreg-Bandes 6 gerade vorlaufend angeordnet und dann im Wesentlichen um eine Breite b_{B} des Prepreg-Bandes 6 verschoben bzw. versetzt und weiter umwunden. In Längsrichtung erfolgt eine seitliche Überlappung 7 des Prepreg-Bandes 6, welche die Festigkeit der Ummantelung 1 entsprechend erhöht. Auf diese Weise wird einer Delamination bei Brandtests entgegengewirkt.

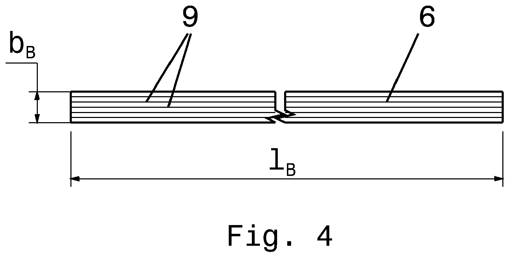

Aus Fig. 4 geht eine Prinzipdarstellung eines Prepreg-Bandes 6 zur Bildung einer Verstärkungslage 5 einer Ummantelung 1 hervor. Das Prepreg-Band 6 wird aus einem Endlos-Prepreg-Material mit entsprechender Faserrichtung (hier in Richtung der Längsausdehnung des Prepreg-Bandes 6) ausgeschnitten, sodass sich im Wesentlichen kein Verschnitt im Gegensatz zu herkömmlichen Herstellungsverfahren ergibt. Auch wenn die Faserrichtung der Fasern 9 des Prepreg-Bandes 6 um 90° gegenüber der dargestellten Variante verdreht ist, ergibt sich ein geringerer Verschnitt als bei schräg angeordneten, beispielsweise in einem Winkel von +/-45° angeordneten, Fasern 9.

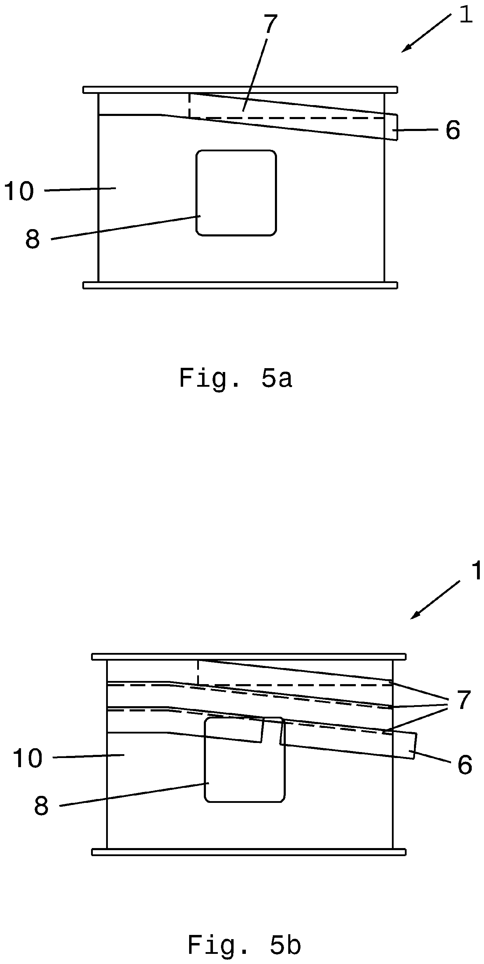

Die Fig. 5a bis 5e zeigen Seitenansichten auf eine erfindungsgemäß aufgebaute Ummantelung 1 bei verschiedenen Herstellungsschritten.

Fig. 5a zeigt eine im Wesentlichen zylindrische Form 10 für die Herstellung einer Ummantelung 1 für ein Flugzeugtriebwerk 2, wobei eine Wartungsöffnung 8 angeordnet ist, die für die Inspektion und Wartung des im Betrieb unter der Ummantelung 1 angeordneten Flugzeugtriebwerks 2 dient. In Fig. 5a wurde ein Prepreg-Band 6 zur Bildung einer Verstärkungslage 5 etwas mehr als eine Windung um die Form 10 angeordnet, wobei die Windung des Prepreg-Bandes 6 im Wesentlichen horizontal verläuft, und nach Erreichen einer Windung im Wesentlichen um die Breite b_{B} des Prepreg-Bandes 6 versetzt wird. Im Bereich der Überlappung 7 der ersten Bahn resultieren entsprechend geänderte Faserrichtungen der Fasern 9 des Prepreg-Bandes 6, welche wiederum positiv zur Torsionsfestigkeit beitragen.

Bei Fig. 5b wurden bereits mehr als drei Windungen des Prepreg-Bandes 6 um die Form 10 gelegt und das Prepreg-Band 6 im Bereich der Wartungsöffnung 8 entsprechend ausgeschnitten. Dieses Ausschneiden, kann im weichen, noch nicht ausgehärteten Zustand des Prepregs mit Hilfe entsprechender Schneidwerkzeuge erfolgen oder nach dem Aushärten der Ummantelung 1 im Autoklaven durch geeignete Fräswerkzeuge.

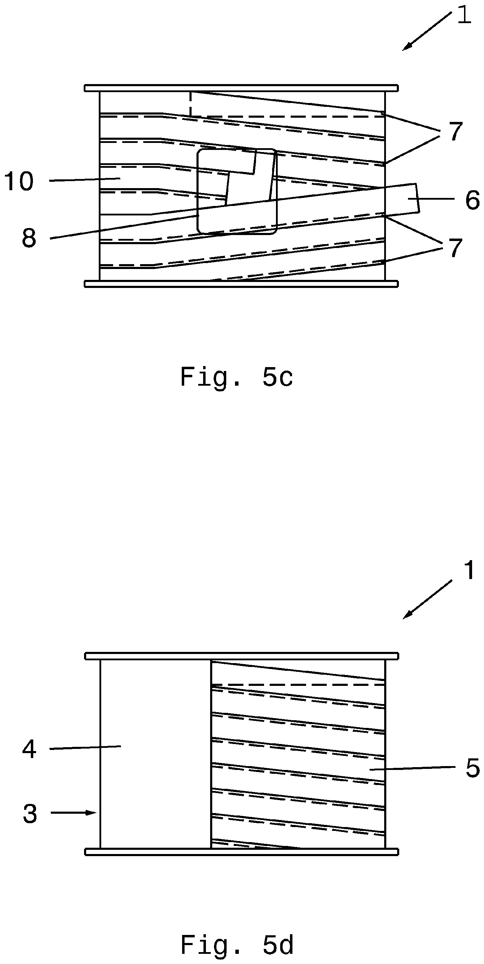

Fig. 5c zeigt die Ummantelung 1 bzw. Verstärkungslage 5, wobei die Windungen des Prepreg-Bandes 6 überkreuzt angeordnet wurden, resultierend in unterschiedlichen Faserrichtungen der Fasern 9 des Prepreg-Bandes 6, was wiederum zu einer höheren Torsionsfestigkeit führt. Die Wartungsöffnung 8 wurde durch entsprechendes Ausschneiden des Prepreg-Bandes 6 teilweise freigelegt.

Fig. 5d zeigt eine Stufe der Herstellung der Ummantelung 1, bei der über eine Verstärkungslage 5 ein Segment 4 einer Prepreg-Lage 3 aufgelegt wurde.

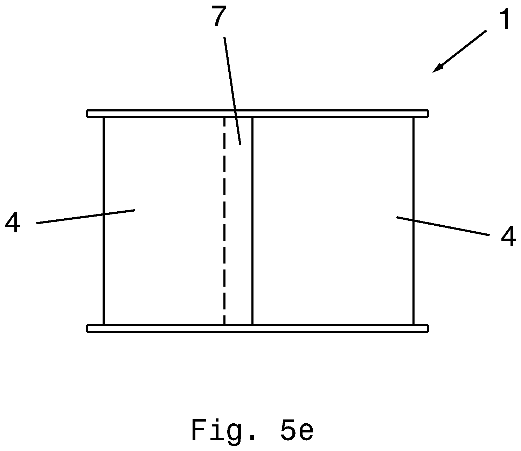

Bei der Darstellung gemäß Fig. 5e wird ein weiteres Segment 4 einer Prepreg-Lage 3 mit einer Überlappung 7 in Umfangsrichtung von beispielsweise 20° aufgelegt. Je nach Anwendung werden vier, sechs oder mehr derartige Prepreg-Lagen 3 und Verstärkungslagen 5 übereinander angeordnet und kombiniert und danach im Autoklaven bei entsprechender Temperatur und entsprechendem Druck ausgehärtet.

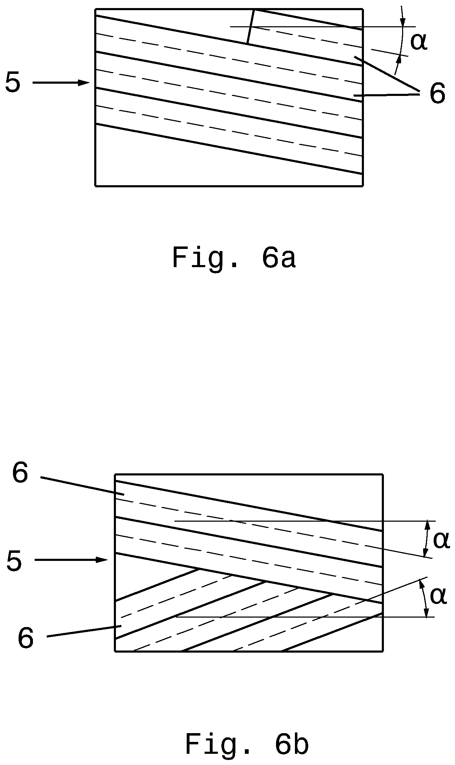

Schließlich gehen aus Fig 6a und 6b zwei Varianten des Verlaufs eines Prepreg-Bandes 6 einer Verstärkungslage 5 einer erfindungsgemäße Ummantelung 1 hervor. Bei der Darstellung gemäß Fig. 6a wird das Prepreg-Band 6 der Verstärkungslage 5 mit konstantem Steigungswinkel α umwickelt (im Gegensatz zur Darstellung gemäß Fig. 3). Die Darstellung gemäß Fig. 6b zeigt eine überkreuzte Anordnung der Prepreg-Bänder 6 der Verstärkungslage 5, wodurch die Faserrichtung entsprechend den unterschiedlichen Steigungswinkeln +/- α angeordnet werden, resultierend in einer höheren Torsionsfestigkeit der Ummantelung 1.

Die vorliegende Erfindung ermöglicht die Herstellung einer Ummantelung 1 für Flugzeugtriebwerke 2, insbesondere ein Mantelstromrohr oder ein Fan-Casing, mit höherer Festigkeit und geringerem Verschnitt und somit geringeren Herstellungskosten. Insbesondere die Delaminierung der Prepreg-Lagen bei Brandtests unter relativ hohen Temperaturen, kann durch eine derartige Anordnung verhindert oder zumindest reduziert werden.

## Patentansprüche

1. Ummantelung (1) für ein Flugzeugtriebwerk (2), insbesondere Mantelstromrohr oder Fan-Casing, bestehend aus mehreren ausgehärteten Prepreg-Lagen (3) mit unterschiedlicher Ausrichtung der Fasern (9), welche Prepreg-Lagen (3) aus mehreren Segmenten (4) mit einer Breite (b_{B}), die im Wesentlichen der Länge (1) der Ummantelung (1) entspricht, bestehen, und die Segmente (4) mit einer Überlappung (7) in Umfangsrichtung der Ummantelung (1) angeordnet sind, **dadurch gekennzeichnet, dass** in Kombination mit den Prepreg-Lagen (3) zumindest eine Verstärkungslage (5) aus einem in mehreren Windungen angeordneten Prepreg-Band (6) vorgesehen ist, wobei die Fasern (9) des Prepreg-Bandes (6) in Richtung der Längsausdehnung des Prepreg-Bandes (6) angeordnet sind, und das Prepreg-Band (6) jeder Verstärkungslage (5) mit einer seitlichen Überlappung (7) angeordnet ist.

2. Ummantelung (1) nach Anspruch 1, **dadurch gekennzeichnet, dass** das Prepreg-Band (6) jeder Verstärkungslage (5) eine Länge (l_{B}) aufweist, welche zumindest dem Umfang (U) der Ummantelung (1) entspricht, und eine Breite (b_{B}) aufweist, die einem Bruchteil der Länge (1) der Ummantelung (1) entspricht.

3. Ummantelung (1) nach Anspruch 1 oder 2, **dadurch gekennzeichnet, dass** die Windungen des Prepreg-Bandes (6) jeder Verstärkungslage (5) konstanten Steigungswinkel (α) aufweisen.

4. Ummantelung (1) nach Anspruch 1 oder 2, **dadurch gekennzeichnet, dass** die Windungen des Prepreg-Bandes (6) jeder Verstärkungslage (5) eine stetige Steigung aufweisen.

5. Ummantelung (1) nach einem der Ansprüche 1 bis 4, **dadurch gekennzeichnet, dass** die Windungen des Prepreg-Bandes (6) jeder Verstärkungslage (5) überkreuzt angeordnet sind.

6. Ummantelung (1) nach einem der Ansprüche 1 bis 5, **dadurch gekennzeichnet, dass** die Fasern (9) zumindest einer Prepreg-Lage (3) und zumindest einer Verstärkungslage (5) eine Ausrichtung von im Wesentlichen 0° bzw. 90° aufweisen.

7. Ummantelung (1) nach einem der Ansprüche 1 bis 6, **dadurch gekennzeichnet, dass** jede Prepreg-Lage (3) aus mehreren, vorzugsweise 3 oder 4, Segmenten (4) mit einer Breite (b_{B}), die im Wesentlichen der Länge (1) der Ummantelung (1) entspricht, bestehten, und dass die Segmente (4) mit einer Überlappung (7) in Umfangsrichtung der Ummantelung (1) angeordnet sind.

8. Ummantelung (1) nach einem der Ansprüche 1 bis 7, **dadurch gekennzeichnet, dass** die Fasern (9) durch Kohlenstofffasern und/oder Glasfasern und/oder Aramidfasern und/oder Keramikfasern gebildet sind.

9. Verfahren zur Herstellung einer Ummantelung (1) für ein Flugzeugtriebwerk (2), insbesondere ein Mantelstromrohr oder ein Fan-Casing, wobei mehrere Prepreg-Lagen (3) mit unterschiedlicher Ausrichtung der Fasern (9) auf einer Form (10) angeordnet und ausgehärtet werden, wobei zur Bildung jeder Prepreg-Lage (3) mehrere Segmente (4) mit einer Breite (b_{B}), die der Länge (1) der Ummantelung (1) entspricht, mit einer Überlappung (7) in Umfangsrichtung der Ummantelung (1) angeordnet werden, **dadurch gekennzeichnet, dass** zusätzlich zu den Prepreg-Lagen (3) vor dem Aushärten zumindest eine Verstärkungslage (5) aus einem in mehreren Windungen angeordneten Prepreg-Band (6) mit einer Ausrichtung der Fasern (9) in Richtung der Längsausdehnung des Prepreg-Bandes (6) auf der Form (10) angeordnet wird, wobei das Prepreg-Band (6) jeder Verstärkungslage (5) mit einer seitlichen Überlappung (7) angeordnet wird.

10. Verfahren nach Anspruch 9, **dadurch gekennzeichnet, dass** das Prepreg-Band (6) jeder Verstärkungslage (5) mit einem konstanten Steigungswinkel (α) angeordnet wird.

11. Verfahren nach Anspruch 9 oder 10, **dadurch gekennzeichnet, dass** das Prepreg-Band (6) jeder Verstärkungslage (5) mit einer stetigen Steigung angeordnet wird.

12. Verfahren nach einem der Ansprüche 9 bis 11, **dadurch gekennzeichnet, dass** zumindest eine Prepreg-Lage (3) und zumindest eine Verstärkungslage (5) mit einer Ausrichtung der Fasern (9) von im Wesentlichen 0° bzw. 90° verwendet wird.

13. Verfahren nach einem der Ansprüche 9 bis 12, **dadurch gekennzeichnet, dass** zur Bildung jeder Prepreg-Lage (3) mehrere, vorzugsweise 3 oder 4, Segmente (4) angeordnet werden.

14. Verfahren nach einem der Ansprüche 9 bis 13, **dadurch gekennzeichnet, dass** Prepreg-Lagen (3) und Verstärkungslagen (5) mit Fasern (9) aus Kohlenstoff und/oder Glas und/oder Aramid und/oder Keramik verwendet werden.

## Claims

1. Casing (1) for an aircraft engine (2), in particular a bypass duct or fan casing, consisting of a plurality of cured prepreg plies (3) having various alignments of the fibres (9), which prepreg plies (3) comprise a plurality of segments (4) having a width (b_{B}) which substantially corresponds to the length (1) of the casing (1), and the segments (4) are arranged so as to overlap (7) in the circumferential direction of the casing (1), **characterised in that** at least one reinforcing ply (5) from a prepreg strip (6) which is arranged in a plurality of windings is provided in conjunction with the prepreg plies (3), the fibres (9) of the prepreg strip (6) being arranged in the direction of the longitudinal extension of the prepreg strip (6), and the prepreg strip (6) of each reinforcing ply (5) being arranged so as to laterally overlap (7).

2. Casing (1) according to claim 1, **characterised in that** the prepreg strip (6) of each reinforcing ply (5) has a length (1_{B}) which at least corresponds to the circumference (U) of the casing (1), and a width (b_{B}) which corresponds to a fraction of the length (1) of the casing (1).

3. Casing (1) according to either claim 1 or claim 2, **characterised in that** the windings of the prepreg strip (6) of each reinforcing ply (5) have a constant incline angle (α).

4. Casing (1) according to either claim 1 or claim 2, **characterised in that** the windings of the prepreg strip (6) of each reinforcing ply (5) have a steady incline.

5. Casing (1) according to any of claims 1 to 4, **characterised in that** the windings of the prepreg strip (6) of each reinforcing ply (5) cross over each other.

6. Casing (1) according to any of claims 1 to 5, **characterised in that** the fibres (9) of at least one prepreg ply (3) and at least one reinforcing ply (5) are substantially aligned at 0° and 90°, respectively.

7. Casing (1) according to any of claims 1 to 6, **characterised in that** each prepreg ply (3) consists of a plurality of segments (4), preferably 3 or 4, having a width (b_{B}) which substantially corresponds to the length (1) of the casing (1), and **in that** the segments (4) are arranged so as to overlap (7) in the circumferential direction of the casing (1).

8. Casing (1) according to any of claims 1 to 7, **characterised in that** the fibres (9) are formed of carbon fibres and/or glass fibres and/or aramid fibres and/or ceramic fibres.

9. Method for manufacturing a casing (1) for an aircraft engine (2), in particular a bypass duct or fan casing, a plurality of prepreg plies (3) having various alignments of the fibres (9) being arranged on a mould (10) and cured, and a plurality of segments (4) having a width (b_{B}) which corresponds to the length (1) of the casing (1) being arranged so as to overlap (7) in the circumferential direction of the casing (1) in order to form each prepreg ply (3), **characterised in that**, before the curing, in addition to the prepreg plies (3) at least one reinforcing ply (5) from a prepreg strip (6) which is arranged in a plurality of windings and of which the fibres (9) are aligned in the direction of the longitudinal extension of the prepreg strip (6) is arranged on the mould (10), the prepreg strip (6) of each reinforcing ply (5) being arranged so as to laterally overlap (7).

10. Method according to claim 9, **characterised in that** the prepreg strip (6) of each reinforcing ply (5) is arranged at a constant incline angle (α).

11. Method according to either claim 9 or claim 10, **characterised in that** the prepreg strip (6) of each reinforcing ply (5) is arranged at a steady incline.

12. Method according to any of claims 9 to 11, **characterised in that** at least one prepreg ply (3) and at least one reinforcing ply (5) of which the fibres (9) are aligned substantially at 0° and 90°, respectively, are used.

13. Method according to any of claims 9 to 12, **characterised in that** a plurality of segments (4), preferably 3 or 4, are arranged for the formation of each prepreg ply (3).

14. Method according to any of claims 9 to 13, **characterised in that** prepreg plies (3) and reinforcing plies (5) having carbon and/or glass and/or aramid and/or ceramic fibres (9) are used.

## Revendications

1. Coque (1) pour un moteur d'avion (2), plus particulièrement tube d'enveloppe ou fan-casing, constitué de plusieurs couches de préimprégné (3) avec une orientation différente des fibres (9), ces couches de préimprégné (3) étant constituées de plusieurs segments (4) avec une largeur (b_{B}), qui correspond globalement à la longueur (I) de la coque (1), et les segments (4) étant disposés avec une superposition (7) dans la direction circonférentielle de la coque (1), **caractérisée en ce que**, en combinaison avec les couches de préimprégné (3), est prévue au moins une couche de renfort (5) constituée d'une bande de préimprégné (6) disposées en plusieurs enroulements, les fibres (9) de la bande de préimprégné (6) étant disposées dans la direction de l'extension longitudinale de la bande de préimprégné (6), et la bande de préimprégné (6) de chaque couche de renfort (5) est disposée avec une superposition latérale (7).

2. Coque (1) selon la revendication 1, **caractérisée en ce que** la bande de préimprégné (6) de chaque couche de renfort (5) présente une longueur (l_{B}) qui correspond au moins à la circonférence (U) de la coque (1), et présente une largeur (b_{B}) qui correspond à une fraction de la longueur (I) de la coque (1).

3. Coque (1) selon la revendication 1 ou 2, **caractérisée en ce que** les enroulements de la bande de préimprégné (6) de chaque couche de renfort (5) présentent un angle d'hélice (α) constant.

4. Coque (1) selon la revendication 1 ou 2, **caractérisée en ce que** les enroulements de la bande de préimprégné (6) de chaque couche de renfort (5) présentent un pas constant.

5. Coque (1) selon l'une des revendications 1 à 4, **caractérisée en ce que** les enroulements de la bande de préimprégné (6) de chaque couche de renfort (5) sont disposés de manière entrecroisée.

6. Coque (1) selon l'une des revendications 1 à 5, **caractérisée en ce que** les fibres (9) d'au moins une couche de préimprégné (3) et au moins une couche de renfort (5) présentent une orientation globale de 0° ou 90°.

7. Coque (1) selon l'une des revendications 1 à 6, **caractérisée en ce que** chaque couche de préimprégné (3) est constituée de plusieurs, de préférence 3 ou 4, segments (4) avec une largeur (b_{B}), qui correspond globalement à la longueur (I) de la coque (1), et **en ce que** les segments (4) sont disposés avec une superposition (7) dans la direction circonférentielle de la coque (1).

8. Coque (1) selon l'une des revendications 1 à 7, **caractérisée en ce que** les fibres (9) sont constituées de fibres de carbone et/ou de fibres de verre et/ou de fibres aramides et/ou de fibres céramiques.

9. Procédé de fabrication d'une coque (1) pour un moteur d'avion (2), plus particulièrement un tube d'enveloppe ou fan-casing, plusieurs couches de préimprégné (3) avec différentes orientations des fibres (9) étant disposées sur une forme (10) et durcies, plusieurs segments (4), avec une largeur (b_{B}) correspondant à la longueur (I) de la coque (1), étant disposés avec une superposition (7) dans la direction circonférentielle de la coque (1) pour la formation de chaque couche de préimprégné (3), **caractérisé en ce que**, en plus des couches de préimprégné (3), avant le durcissement, au moins une couche de renfort (5), constituée d'une bande de préimprégné (6) disposée en plusieurs enroulements, avec une orientation des fibres (9) dans la direction de l'extension longitudinale de la bande de préimprégné (6), est disposée sur la forme (10), la bande de préimprégné (6) de chaque couche de renfort (5) étant disposée avec une superposition latérale (7).

10. Procédé selon la revendication 9, **caractérisé en ce que** la bande de préimprégné (6) de chaque couche de renfort (5) est disposée avec un angle d'hélice (α) constant.

11. Procédé selon la revendication 9 ou 10, **caractérisé en ce que** la bande de préimprégné (6) de chaque couche de renfort (5) est disposée avec un pas constant.

12. Procédé selon l'une des revendications 9 à 11, **caractérisée en ce qu'**au moins une couche de préimprégné (3) et au moins une couche de renfort (5) avec une orientation globale des fibres (9) de 0° ou 90° sont utilisées.

13. Procédé selon l'une des revendications 9 à 12, **caractérisée en ce que**, pour la formation de chaque couche de préimprégné (3), plusieurs de préférence 3 ou 4, segments (4), sont disposés.

14. Procédé selon l'une des revendications 9 à 13, **caractérisée en ce que** des couches de préimprégné (3) et des couches de renfort (5) avec des fibres (9) de carbone et/ou de verre et/ou aramides et/ou céramiques sont utilisées.
